# EUROPÄISCHE PATENTSCHRIFT

(11) **EP 1 523 598 B1**
(45) Veröffentlichungstag und Bekanntmachung des Hinweises auf die Patenterteilung: **07.11.2007**
(21) Anmeldenummer: 03765054.6
(22) Anmeldetag: 18.07.2003
(51) Int. Cl.: E01D 19/04

(54) **GLEITLAGER FÜR DAS BAUWESEN UND WERKSTOFF HIERFÜR**
SLIDING BEARINGS FOR CIVIL ENGINEERING AND MATERIAL THEREFOR
PALIER LISSE UTILISE DANS LE BATIMENT ET MATERIAU A CET EFFET

(30) Priorität: 19.07.2002 WO PCT/EP02/08087
(43) Veröffentlichungstag der Anmeldung: 20.04.2005
(73) Patentinhaber: Maurer Söhne GmbH & Co. KG, 80807 München (DE)
(72) Erfinder: BRAUN, Christian, 83607 Holzkirchen (DE); SEGERER, Hans, 82194 Gröbenzell (DE)
(74) Vertreter: GROSSE BOCKHORNI SCHUMACHER
(86) Internationale Anmeldenummer: PCT/EP2003/007888
(87) Internationale Veröffentlichungsnummer: WO 2004/009908

(56) Entgegenhaltungen:
- EP-A- 0 943 736
- DE-A- 4 210 351
- GB-A- 2 359 345

## Beschreibung

Die vorliegende Erfindung betrifft ein Gleitlager für das Bauwesen, insbesondere Brückengleitlager, für erhöhte Beanspruchungen und/oder Lebensdauern, die insbesondere bei Brücken und Fahrwerksträgem von Hochgeschwindigkeitsstrecken oder Magnetschwebebahnen zum Einsatz kommen, sowie einen Gleitwerkstoff und die Verwendung in derartigen Gleitlagern.

Gleitwerkstoffe für den Einsatz im Bauwesen und insbesondere im Brückenbau sind in der Europäischen Norm EN 1337 /Teil 2 "Gleitelemente" bezüglich ihrer Eigenschaften und konstruktiven Vorgaben genormt. Nach dem Stand der Technik werden für entsprechende Gleitelemente als Gleitwerkstoffe häufig Thermoplaste und insbesondere Teflon (PTFE) eingesetzt. Diese erfüllen die der Norm entsprechenden Anforderungen.

Aufgrund der technischen Weiterentwicklung im Bauwesen und insbesondere auch beim Bau von Brückenbauwerken, sind jedoch auch die Anforderungen an den Gleitwerkstoff hinsichtlich aufnehmbarer Pressung, Gleitwiderstand in Abhängigkeit von der Umgebungstemperatur, zulässiger Verschiebegeschwindigkeit sowie zulässigem aufaddiertem Gleitweg und Verschleißbeständigkeit erheblich gestiegen. Eine Veränderung dieser Parameter bzw. ein Durchbrechen bestimmter Grenzwerte für diese Parameter würde es nämlich erlauben, konstruktiv andere, einfachere und bessere Lösungen zu finden.

Ein Ansatzpunkt ist das Schmieren der Gleitfläche mit einem Schmiermittel. Hierbei wurden in der Vergangenheit Schmiertaschen in den Gleitflächen vorgesehen. In der GB 2 359 345 A ist dann vorgeschlagen worden, das Schmiermittel noch feiner über die Gleitfläche zu verteilen, indem poröses Material, insbesondere gesintertes HMWPE und UHMWPE, für die Gleitfläche verwendet wird, in dessen Poren das Schmiermittel besonders fein verteilt eingelagert werden kann. Diese Lösung hat jedoch bereits bei sehr kleinen Gleitwegen zu unerwünscht hohen Reibwerten geführt.

Besonders hohe Anforderungen hinsichtlich von Gleitwerkstoffen werden insbesondere bei Brückenbauten von Hochgeschwindigkeitsstrecken, z. B. Hochgeschwindigkeitsbahnstrecken sowie Magnetschwebebahnen usw., gestellt. Bei Brückenbauten für derartige Hochgeschwindigkeitsstrecken werden die Lager aufgrund der hohen Geschwindigkeit von über die Brücken fahrenden Zügen schlagartig hohen und häufig auftretenden Beanspruchungen ausgesetzt. Um diesen Anforderungen gerecht zu werden, müssen deshalb verbesserte Gleitwerkstoffe bereitgestellt werden.

Es ist deshalb Aufgabe der vorliegenden Erfindung ein Gleitlager bzw. einen Gleitwerkstoff hierfür bereitzustellen, der gegenüber den bisher verwendeten Gleitwerkstoffen ein verbessertes Eigenschaftsprofil aufweist. Insbesondere soll eine für Brückenlager für Hochgeschwindigkeitsstrecken geeignete Kombination von erforderlichen Eigenschaften durch den Gleitwerkstoff gewährleistet werden.

Diese Aufgabe wird gelöst durch den Einsatz eines Gleitwerkstoffs gemäß Anspruch 1 bzw. ein Gleitlager nach Anspruch 9 sowie dem Gleitwerkstoff nach Anspruch 16. Vorteilhafte Ausgestaltungen sind Gegenstand der abhängigen Ansprüche.

Gemäß der vorliegenden Erfindung wird als Gleitwerkstoff in Lagern im Bauwesen, insbesondere Brückengleitlagern, vorzugsweise für Brücken von Hochgeschwindigkeitsstrecken die Verwendung von UHMWPE (**U**ltra **H**igh **M**olecular **W**eight **P**oly**E**thylen) vorgeschlagen. Aufgrund umfassender Versuche mit unterschiedlichen Lagerwerkstoffen wurde nämlich ermittelt, dass UHMWPE (**U**ltra **H**igh **M**olecular **W**eight **P**oly**E**thylen) die erforderlichen Eigenschaften für die Verwendung in Lagern im Bauwesen, insbesondere Brückengleitlagern, die den oben genannten Anforderungen entsprechen, erfüllt. Durch das sehr hohe Molekulargewicht von vorzugsweise 3 bis 6 Mio g/mol. weist das UHMWPE eine extrem hohe, praktisch unendlich hohe Schmelzviskosität auf und besitzt eine hervorragende Zähigkeit sowie ausgezeichnete Schnittbeständigkeit und Verschleißfestigkeit. Es hat sich nun gezeigt, dass auch die anderen geforderten Einsatzparameter wie aufnehmbare Flächenpressung, Gleitwiderstand in Abhängigkeit von der Umgebungstemperatur, zulässige Verschiebegeschwindigkeit sowie zulässiger Gleitweg weit über das hinausgehen, was bekannte Gleitwerkstoffe für den industriellen Einsatz leisten können. Hierbei wird die Europäische Norm EN 1337/ Teil 2 laut der derzeitig gültigen Ausgabe als Referenz herangezogen und entsprechend voll umfänglich in den Offenbarungsgehalt einbezogen Es hat sich nämlich gezeigt, dass die in der EN 1337/ Teil 2 geforderten und entsprechend zu prüfenden Einsatzparameter sowohl einzeln als auch in Kombination insbesondere auch bei niedrigen Temperaturen weit übertroffen werden können.

Entsprechend ist die Verwendung von UHMWPE auch insbesondere nach den abhängigen Ansprüchen für Einsatzgebiete vorgesehen, bei denen entsprechende Werte bzgl. der Flächenpressung, des Gleitwegs, der Gleitgeschwindigkeit und der Einsatztemperaturen auftreten. Dies hat wiederum Vorteile bezüglich der Gestaltung und des Einsatzes der Gleitlager, z.B. hinsichtlich Abnutzungen der Lager, Einsatzart (Temperaturen) usw.. Da der Verschleiß mit dem Produkt aus Geschwindigkeit und Pressung zunimmt, wirkt sich das auch auf die Lebensdauer des Gleitwerkstoffs und somit des Gleitlagers aus.

Vorzugsweise kann der Gleitwerkstoff zur Verbesserung der Formbeständigkeit noch mit einem Füllstoff versehen werden. Hierbei haben sich insbesondere Glasfasern, Glasmikroperlen und Keramikmikroperlen bewährt. In gleicher Weise können auch weitere Additive zur Verbesserung weiterer Eigenschaften zugesetzt werden, insbesondere zum Verbessern der Gleiteigenschaften. Hierzu verwendet man insbesondere Russ, MoS₂ oder vorzugsweise Öl. Die Gleiteigenschaften des Gleitwerkstoffs UHMWPE lassen sich auch noch dadurch verbessern, dass in dem Gleitwerkstoff, der in jeglicher Form, insbesondere in Form einer ebenen oder gekrümmten Gleitscheibe oder Gleitplatte vorliegen kann, Schmiertaschen zur Aufnahme von zusätzlichen Schmierstoffen vorgesehen sind.

Um ganz bestimmte, definierte Eigenschaften einzustellen, ist es weiterhin vorteilhaft, verschiedene UHMWPEs mit unterschiedlichem Molekulargewicht in entsprechenden Anteilen zu mischen.

In einem bevorzugten Ausführungsbeispiel wurde erfindungsgemäß UHMWPE (**U**ltra **H**igh **M**olecular **W**eight **P**oly**E**thylen) als Gleitwerkstoff in einem Brückengleitlager eingesetzt. Der Gleitwerkstoff wurde dabei in Form einer ebenen Gleitscheibe von einer Trägerplatte aufgenommen, wobei die Gleitscheibe bis zur Hälfte ihrer Dicke in der Trägerplatte eingekammert war. Eignungsversuche gemäß der Europäischen Norm EN 1337/Teil 2 haben ergeben, dass gegenüber PTFE das UHMWPE eine um mindestens 50% höhere Flächenpressung sowie einen mindestens 3-fachen Gleitweg bei 5-facher Gleitgeschwindigkeit erlaubt. Außerdem wurde gefunden, dass trotz der vorher genannten höheren Beanspruchungen bis zum Ende der Laufzeit Reibwerte gemäß EN 1337/Teil2 gemessen wurden, die sich ebenfalls bei Umgebungstemperaturen von bis zu -35°C aufrechterhalten ließen.

Nach einer bevorzugten Ausführungsform, für die nach einem weiteren Aspekt der Erfindung auch unabhängig Schutz begehrt wird, hat es sich als besonders vorteilhaft erwiesen, dass UHMWPE mit einem Schmierfett auf Basis von Silikonfett zu kombinieren. Diese Kombination hat sich als besonders vorteilhaft bezüglich der Lebensdauer und hier besonders hinsichtlich des zu erzielenden Gesamtgleitwegs sowie der Verschleißbeständigkeit als günstig herausgestellt. Hierbei wurde gefunden, dass eine Einarbeitung des Silikonfetts durch Druck und/oder durch Einreiben, wie sie insbesondere beim Einlaufen eines derartigen Gleitlagers vorkommt, wahrscheinlich zu einer Trennung der seifigen und öligen Bestandteile fiihrt, wobei entsprechend die Oberflächenschicht günstig modifiziert wird. Die vorteilhaften Gleiteigenschaften bzw. die Verschleißbeständigkeit wird nämlich auch dann noch beobachtet, wenn das Schmierfett bereits aus den Gleitflächen durch die Beanspruchung im Gleitlager entfernt worden ist.

Als Silikonfett hat sich insbesondere ein lithiumverseiftes Silikonöl auf Basis von Methylphenylsilikonöl bewährt. Es ist aber denkbar, auch andere Silikonfette zu verwenden, sofern Sie eine oder mehrere der geforderten Eigenschaften aufweisen. Insbesondere sollten die eingesetzten Silikonfette einen Tropfpunkt von > 200° C, insbesondere 210° C, nach DIN ISO 2176, eine Walkpenetration von 20 - 35 mm, insbesondere 25 - 30 mm, vorzugsweise 26,5 bis 29,5 mm nach der DIN ISO 2137, einen Fließdruck von < 200 hPa bei 20°C bzw. < 100 hPa bei - 40°C nach DIN 51805, sowie eine Ölabscheidung von < 1,5 %, insbesondere < 1 % bei 40°C und 18 Stunden Dauer nach DIN 51817 aufweisen.

## Patentansprüche

1. Verwendung von UHMWPE (**U**ltra **H**igh **M**olecular **W**eight **P**oly**E**thylene) welches in Eignungsversuchen die Reibwerte gemäß EN 1337-2:2000 erfüllt, wobei wenigstens im Hinblick auf die Flächenpressung, den Gleitweg und / oder die Gleitgeschwindigkeit ein Wert verwendet wird, der größer als der entsprechende nach EN 1337-2:2000 festgelegte und geprüfte Normenwert ist, nämlich hinsichtlich der Flächenpressung größer als 30 MPa, hinsichtlich dem Gleitweg größer als 10242 m und hinsichtlich der Gleitgeschwindigkeit größer als 2 mm/s, wobei das UHMWPE als Gleitwerkstoff in Form einer Gleitscheibe in Lagern im Bauwesen, nämlich solchen gemäß EN 1337-1:2000 wie etwa Brückengleitlagern verwendet wird.

2. Verwendung von UHMWPE (**U**ltra **H**igh **M**olecular **W**eight **P**oly**E**thylene) nach Anspruch 1,
**dadurch gekennzeichnet, dass**
der Gleitwerkstoff hierbei Beanspruchungen ausgesetzt ist, die über den Bemessungswerten der EN 1337-2:2000 liegen, nämlich hinsichtlich der Flächenpressung einem Wert von mehr als 60 MPa , hinsichtlich dem aufaddiertem Gleitweg einem Wert von mehr als 10242 m und hinsichtlich der Gleitgeschwindigkeit einem Wert von mehr als 2 mm/s.

3. Verwendung von UHMWPE (**U**ltra **H**igh **M**olecular **W**eight **P**oly**E**thylene) nach Anspruch 1 oder 2,
**dadurch gekennzeichnet, dass**
es in Gleitlagern für Bauwerke von Magnetschwebebahnen zum Einsatz kommt.

4. Verwendung von UHMWPE (**U**ltra **H**igh **M**olecular **W**eight **P**oly**E**thylene) nach einem der vorhergehenden Ansprüche,
**dadurch gekennzeichnet, dass**
der Gleitwerkstoff eine Flächenpressung bis zum 1,5-fachen des maximalen Normwerts nach EN 1337-2:2000 aufnehmen kann.

5. Verwendung von UHMWPE (**U**ltra **H**igh **M**olecular **W**eight **P**oly**E**thylene) nach einem der vorhergehenden Ansprüche,
**dadurch gekennzeichnet, dass**
der Gleitwerkstoff einen Gleitweg bis zum 3-fachen des maximalen Normwerts nach EN 1337-2:2000 aufnehmen kann.

6. Verwendung von UHMWPE (**U**ltra **H**igh **M**olecular **W**eight **P**oly**E**thylene) nach einem der vorhergehenden Ansprüche,
**dadurch gekennzeichnet, dass**
der Gleitwerkstoff eine Gleitgeschwindigkeit bis zum 5-fachen des maximalen Normwerts nach EN 1337-2:2000 aufnehmen kann.

7. Verwendung von UHMWPE (**U**ltra **H**igh **M**olecular **W**eight **P**oly**E**thylene) nach einem der vorhergehenden Ansprüche,
**dadurch gekennzeichnet, dass**
der Gleitwerkstoff bei einer Temperatur von -35°C die Forderung nach EN 1337-2:2000 erfiillt.

8. Verwendung von UHMWPE (**U**ltra **H**igh **M**olecular **W**eight **P**oly**E**thylene) nach einem der vorhergehenden Ansprüche,
**dadurch gekennzeichnet, dass**
zusammen mit UHMWPE Silikonfett, insbesondere zur Anfangsschmierung, eingesetzt wird.

9. Gleitlager, vorzugsweise für Brücken von Hochgeschwindigkeitsstrecken ,
**dadurch gekennzeichnet, dass**
das im Gleitlager als Gleitwerkstoff UHMWPE (**U**ltra **H**igh **M**olecular **W**eight **P**oly**E**thylene) wie in einem der vorhergehenden Ansprüche verwendet wird.

10. Gleitlager nach Anspruch 9,
**dadurch gekennzeichnet, dass**
der Gleitwerkstoff einen Füllstoff, insbesondere Glasperlen und/ oder Glasmikroperlen und/oder Keramikmikroperlen, zur Verbesserung der Formbeständigkeit umfasst.

11. Gleitlager nach Anspruch 9 oder 10,
**dadurch gekennzeichnet, dass**
der Gleitwerkstoff Additive, insbesondere Russ und/ oderMoS₂ und/ oder Öl zur Verbesserung der Gleiteigenschaften umfasst.

12. Gleitlager nach einem der Ansprüche 9 bis 11,
**dadurch gekennzeichnet, dass**
das Gleitlager den Gleitwerkstoff in Form einer ebenen oder gekrümmten Gleitscheibe oder Gleitplatte umfasst.

13. Gleitlager nach einem der Ansprüche 9 bis 12,
**dadurch gekennzeichnet, dass**
der Gleitwerkstoff Schmiertaschen zur Aufnahme von Schmierstoffen aufweist.

14. Gleitlager nach einem der Ansprüche 9 bis 13,
**dadurch gekennzeichnet, dass**
an den Gleitfäden, insbesondere den Schmiertaschen, vorzugsweise zur Anfangsschmierung, Silikonfett vorgesehen ist.

15. Gleitlager nach Anspruch 12,
**dadurch gekennzeichnet, dass**
die Gleitscheibe oder -platte in einer Trägerplatte aufgenommen ist, wobei sie vorzugsweise mindestens bis zur Hälfte ihrer Dicke eingekammert ist.

16. Gleitwerkstoff in Form einer Gleitscheibe zur Verwendung in einem Gleitlager nach einem der Ansprüche 9 bis 15, aus UHMWPE,
**dadurch gekennzeichnet, dass**
der Oberflächenbereich mit Silikonfett modifiziert ist.

17. Gleitwerkstoff nach Anspruch 16,
**dadurch gekennzeichnet, dass**
das Silikonfett in die Oberfläche eingearbeitet ist, insbesondere durch Druckbelastung und/oder Einreiben, vorzugsweise durch das Einlaufen des Gleitlagers.

18. Gleitwerkstoff nach Anspruch 16 oder 17,
**dadurch gekennzeichnet, dass**
das Silikonfett ein lithiumverseiftes Silikonöl auf Basis von Methylphenylsilikonöl ist.

19. Gleitwerkstoff nach einem der Ansprüche 16 bis 18
**dadurch gekennzeichnet, dass**
das Silikonfett folgende Eigenschaften aufweist:
| | |
|---|---|
| Tropfpunkt | > 200° C nach DIN ISO 2176 und/oder |
| Walkpenetration von | 20 - 35 mm, insbesondere |
| | 25 - 30 mm, vorzugsweise |
| | 26,5 bis 29,5 mm nach den DIN ISO 2137 und/oder |
| Fließdruck von | < 200 hPa bei 20°C nach DIN 51805 und/oder |
| Fließdruck von | < 1000 hPa bei - 40°C nach DIN 51805 und/oder eine |
| Ölabscheidung von | < 1,5 %, insbesondere < 1 % bei 40°C und 18 Stunden Dauer nach DIN 51817. |

## Claims

1. Utilization of UHMWPE (Ultra High Molecular Weight Polyethylene) which in suitability testing complies with the friction coefficients in accordance with the EN 1337-2:2000, at least as regards the surface pressure, the sliding path and/or the sliding speed a value is employed, which is larger than the corresponding standard value set and tested in accordance with the EN 1337-2:2000, namely as regards the surface pressure being greater than 30 MPa, as regards the sliding path greater than 10242 m and as regards the sliding speed greater than 2 mm/s, the UHMWPE being employed as sliding material in form of a sliding disk in bearings in building construction more particularly those in accordance with the EN 1337-1:2000 such as sliding bearings for bridges.

2. Utilization of UHMWPE (Ultra High Molecular Weight Polyethylene) in accordance with claim 1,
**characterized in that**
the low friction material in this case is subjected to loads, which are above the values of the EN 1337-2:2000, namely as regards surface pressure a value of more than 60 MPa, as regards the summated sliding path a value of more than 10242 m and as regards the sliding speed a value of more than 2 mm/s.

3. Utilization of UHMWPE (Ultra High Molecular Weight Polyethylene) in accordance with claim 1 or 2,
**characterized in that**
it is employed in plain bearings for structures for magnetically levitated railroads.

4. Utilization of UHMWPE (Ultra High Molecular Weight Polyethylene) in accordance with one of the aforementioned claims,
**characterized in that**
the sliding material can absorb a surface pressure up to the 1.5-fold value of the maximum norm value in accordance with EN 1337-2:2000.

5. Utilization of UHMWPE (**U**ltra **H**igh **M**olecular **W**eight **P**oly**E**thylene) in accordance with one of the aforementioned claims,
**characterized in that**
the sliding material can absorb a sliding path up to the 3-fold maximum norm value in accordance with EN 1337-2:2000.

6. Utilization of UHMWPE (**U**ltra **H**igh **M**olecular **W**eight **P**oly**E**thylene) in accordance with one of the aforementioned claims,
**characterized in that**
the sliding material can absorb a sliding speed of up to the 5-fold maximum nominal value in accordance with EN 1337-2:2000.

7. Utilization of (**U**ltra **H**igh **M**olecular **W**eight **P**oly**E**thylene) in accordance with one of the aforementioned claims,
**characterized in that**
the sliding material meets the demand in accordance with EN 1337-2:2000 at a temperature of -35°C.

8. Utilization of UHMWPE (**U**ltra **H**igh **M**olecular **W**eight **P**oly**E**thylene) in accordance with one of the aforementioned claims,
**characterized in that**
together with UHMWPE silicone grease , in particular for initial lubrication.

9. Sliding bearing, in particular sliding bearing for bridges of high-speed roads,
**characterized in that**
in the sliding bearing UHMWPE (**U**ltra **H**igh **M**olecular **W**eight **P**oly**E**thylene) according to any of the aforementioned claims is utilized as the sliding bearing material.

10. Sliding bearing in accordance with claim 9,
**characterized in that**
the sliding material includes a filler, especially glass beads and/or glass micro beads and/or ceramics micro beads to improve the dimensional stability.

11. Sliding bearing in accordance with claim 9 or 10,
**characterized in that**
the sliding material includes additives, in particular soot and/or MoS₂and/ or oil to improve the sliding properties.

12. Sliding bearing in accordance with one of the claims 9 to 11,
**characterized in that**
the sliding bearing includes the sliding bearings material in the form of a plane or curved sliding disk or sliding plate in the form of guiding strips.

13. Sliding bearing in accordance with the claims 9 to 12,
**characterized in that**
the sliding bearings material has lubrication pockets to receive lubricants.

14. Sliding bearing in accordance with one of the claims 9 to 13,
**characterized in that**
on the sliding threads, in particular on the lubrication pockets, silicone grease is foreseen, preferably for initial lubrication.

15. Sliding bearing in accordance with claim 12,
**characterized in that**
the sliding disk or sliding plate is taken up in a carrier plate , wherein it is preferably sunk-in up to half of its thickness.

16. Sliding material in form of a sliding disk of UHMWPE for utilization in a sliding bearing in accordance to one of the claims 9 to 15,
**characterized in that**
the surface area is modified with silicone grease.

17. Sliding material in accordance with claim 16,
**characterized in that**
the silicone grease in introduced into the surface, in particular by pressure load and/or rubbing in, preferably by the wearing in of the sliding bearing.

18. Sliding material in accordance with claim 16 or 17,
**characterized in that**
the silicone grease is a lithium saponified silicone oil on he basis of methyl phenyl silicone oil.

19. Sliding material in accordance with one of the claims 16 to 18
**characterized in that**
the silicone grease has the following properties:
| | |
|---|---|
| Dropping point | > 200° C in accordance with DIN ISO 2176 and/or |
| worked penetration of | 20 - 35 mm, in particular |
| | a. 25 - 30 mm, preferably |
| | b. 26.5 to 29.5 mm according to the DIN ISO 2137 |
| | and/or |
| Flow pressure of | < 200 hPa at 20°C according to DIN 51805 and/or |
| Flow pressure of | < 1000 hPa at - 40°C according to DIN 51805 and/or an |
| Oil precipitation of | < 1.5 %, in particular < 1 % at 40°C and a duration of 18 |
| | hours according to DIN 51817. |

## Revendications

1. Utilisation de UHMWPE (**U**ltra **H**igh **M**olecular **W**eight **P**oly**E**thylene) qui, dans des essais de qualification, répond aux coefficients de frottement selon EN 1337-2:2000, où au moins concernant la pression superficielle, le chemin de glissement et/ou la vitesse de glissement, on utilise une valeur qui est supérieure à la valeur normalisée correspondante, établie et testée selon EN 1337-2:2000, à savoir concernant la pression superficielle supérieure à 30 MPa, concernant le chemin de glissement supérieure à 10242 m et concernant la vitesse de glissement supérieure à 2 mm/s, où le UHMWPE est utilisé en construction comme matériau de glissement sous forme d'un disque de glissement dans des paliers, à savoir ceux selon EN 1337-1 :2000 comme les paliers à glissement de pont, par exemple.

2. Utilisation de UHMWPE (**U**ltra **H**igh **M**olecular **W**eight **P**oly**E**thylene) selon la revendication 1 **caractérisée en ce que** le matériau de glissement est exposé à des sollicitations qui sont situées au-dessus des valeurs de dimensionnement de EN 1337-2:2000, à savoir concernant la pression superficielle une valeur supérieure à 60 MPa, concernant le chemin de glissement cumulé une valeur supérieure à 10242 m et concernant la vitesse de glissement une valeur supérieure à 2 mm/s.

3. Utilisation de UHMWPE (**U**ltra **H**igh **M**olecular **W**eight **P**oly**E**thylene) selon la revendication 1 ou 2 **caractérisée en ce qu'**il est utilisé dans des paliers à glissement pour ouvrages de voies à sustentation magnétique.

4. Utilisation de UHMWPE (**U**ltra **H**igh **M**olecular **W**eight **P**oly**E**thylene) selon l'une des revendications précédentes **caractérisée en ce que** le matériau de glissement peut supporter une pression superficielle pouvant atteindre 1,5 fois la valeur normalisée maximale selon EN 1337-2:2000.

5. Utilisation de UHMWPE (**U**ltra **H**igh **M**olecular **W**eight **P**oly**E**thylene) selon l'une des revendications précédentes **caractérisée en ce que** le matériau de glissement peut supporter un chemin de glissement pouvant atteindre 3 fois la valeur normalisée maximale selon EN 1337-2:2000.

6. Utilisation de UHMWPE (**U**ltra **H**igh **M**olecular **W**eight **P**oly**E**thylene) selon l'une des revendications précédentes **caractérisée en ce que** le matériau de glissement peut supporter une vitesse de glissement pouvant atteindre 5 fois la valeur normalisée maximale selon EN 1337-2:2000.

7. Utilisation de UHMWPE (**U**ltra **H**igh **M**olecular **W**eight **P**oly**E**thylene) selon l'une des revendications précédentes **caractérisée en ce que** le matériau de glissement répond à l'exigence selon EN 1337-2:2000 à une température de -35°C.

8. Utilisation de UHMWPE (**U**ltra **H**igh **M**olecular **W**eight **P**oly**E**thylene) selon l'une des revendications précédentes **caractérisée en ce qu'**il est utilisé en même temps que de la graisse de silicone UHMWPE, en particulier pour la lubrification initiale.

9. Palier à glissement, de préférence pour ponts de sections à grande vitesse, **caractérisé en ce que** du UHMWPE (**U**ltra **H**igh **M**olecular **W**eight **P**oly**E**thylene) est utilisé comme matériau de glissement selon l'une des revendications précédentes.

10. Palier à glissement selon la revendication 9 **caractérisé en ce que** le matériau de glissement comprend une charge, en particulier des billes de verre et/ou des microbilles de verre et/ou des microbilles de céramique, pour améliorer la stabilité dimensionnelle.

11. Palier à glissement selon la revendication 9 ou 10 **caractérisé en ce que** le matériau de glissement comprend des additifs, en particulier du noir de fumée et/ou MoS₂ et/ou de l'huile pour améliorer les propriétés de glissement.

12. Palier à glissement selon l'une des revendications 9 à 11 **caractérisé en ce que** le palier à glissement comprend le matériau de glissement sous forme d'un disque de glissement ou d'une plaque de glissement plan ou courbé.

13. Palier à glissement selon l'une des revendications 9 à 12 **caractérisé en ce que** le matériau de glissement comporte des creux de lubrification pour recevoir des lubrifiants.

14. Palier à glissement selon l'une des revendications 9 à 13 **caractérisé en ce que** de la graisse de silicone est prévue au niveau des fils de glissement, en particulier des poches de lubrification, de préférence pour la lubrification initiale.

15. Palier à glissement selon la revendication 12 **caractérisé en ce que** le disque ou plaque de glissement est reçu dans une plaque de support, où il est inclus de préférence au moins jusqu'à la moitié de son épaisseur.

16. Matériau de glissement sous forme d'un disque de glissement destiné à être utilisé dans un palier à glissement selon l'une des revendications 9 à 15, en UHMWPE, **caractérisé en ce que** le domaine superficiel est modifié avec de la graisse de silicone.

17. Matériau de glissement selon la revendication 16 **caractérisé en ce que** la graisse de silicone est incorporée dans la surface, en particulier par charge de pression et/ou enduction, de préférence par l'arrivée du palier à glissement.

18. Matériau de glissement selon la revendication 16 ou 17 **caractérisé en ce que** la graisse de silicone est une huile de silicone saponifiée au lithium à base d'huile de méthylphénylsilicone.

19. Matériau de glissement selon l'une des revendications 16 à 18 **caractérisé en ce que** la graisse de silicone présente les propriétés suivantes :
| | |
|---|---|
| point de goutte | > 200°C selon DIN ISO 2176 et/ou |
| pénétration de pilonnage de | |
| | 20-35 mm, en particulier |
| | 25 - 30 mm, de préférence |
| | 26,5 à 29,5 mm selon DIN ISO 2137 et/ou |
| pression d'écoulement | |
| de | < 200 hPa à 20°C selon DIN 51805 et/ou |
| pression d'écoulement | |
| de | < 1000 hPa à -40°C selon DIN 51805 et/ou une |
| séparation d'huile de | < 1,5 %, en particulier < 1 % à 40°C et une durée de 18 heures |
| | selon DIN 51817. |
